# EUROPÄISCHE PATENTANMELDUNG

(11) **EP 3 736 086 A1**
(43) Veröffentlichungstag der Anmeldung: **11.11.2020**
(21) Anmeldenummer: 19173019.1
(22) Anmeldetag: 07.05.2019
(51) Int. Cl.: B24B 55/10

(54) **STAUBHAUBENVORRICHTUNG FÜR EIN WERKZEUGGERÄT, SOWIE SEINE VERWENDUNG UND EIN VERFAHREN ZUR STAUBERFASSUNG**

(71) Anmelder: Hilti Aktiengesellschaft, 9494 Schaan (LI)
(72) Erfinder: Ohlendorf, Oliver, 86899 Landsberg (DE)
(74) Vertreter: Hilti Aktiengesellschaft Corporate Intellectual Property

(57) **Zusammenfassung**

Die vorliegende Erfindung betrifft eine Staubhaubenvorrichtung für ein Werkzeuggerät, sowie seine Verwendung und ein Verfahren zur Stauberfassung. Die Staubhaubenvorrichtung umfasst an ihrer Unterseite verschiedene Öffnungen, durch die ein Gemisch aus Luft und Staub, das bei der Arbeit mit dem Werkzeuggerät entsteht, abgesaugt werden kann. In weiteren Aspekten betrifft die Erfindung die Verwendung einer Staubhaube, insbesondere bei verschiedenen Arbeitstiefen des Werkzeuggeräts, sowie ein Verfahren zur Stauberfassung, wobei ein Öffnen und Schließen der Öffnungen der Staubhaubenvorrichtung in Abhängigkeit von der Arbeitstiefe des Werkzeuggeräts gesteuert werden kann.

## Beschreibung

Die vorliegende Erfindung betrifft eine Staubhaubenvorrichtung für ein Werkzeuggerät, sowie seine Verwendung und ein Verfahren zur Stauberfassung. Die Staubhaubenvorrichtung umfasst an ihrer Unterseite verschiedene Öffnungen, durch die ein Gemisch aus Luft und Staub, das bei der Arbeit mit dem Werkzeuggerät entsteht, abgesaugt werden kann. Dieses Absaugen wird im Sinne der Erfindung vorzugsweise als Stauberfassung bezeichnet. In weiteren Aspekten betrifft die Erfindung die Verwendung einer Staubhaube, insbesondere bei verschiedenen Arbeitstiefen des Werkzeuggeräts, sowie ein Verfahren zur Stauberfassung, wobei ein Öffnen und Schließen der Öffnungen der Staubhaubenvorrichtung in Abhängigkeit von der Arbeitstiefe des Werkzeuggeräts gesteuert werden kann.

Es ist bekannt, dass bei der Arbeit mit einem Werkzeuggerät Staub entstehen kann. Die Staubpartikel bilden zusammen mit der umgebenden Luft ein Staub-Luft-Gemisch, das für den Menschen ein Gesundheitsrisiko darstellen kann. Im Sinne eines vorbeugenden Gesundheitsschutzes ist es wünschenswert, wenn verhindert werden kann, dass dieser Staub bzw. das angesprochene Staub-Luft-Gemisch in die Atemwege des Nutzers des Werkzeuggeräts gelangt. Im Stand der Technik sind verschiedene Absaughauben oder Staubhauben für Werkzeuggeräte bekannt. Beispielsweise sind solche Staubhauben bekannt, die ein Arbeitsmittel des Werkzeuggeräts einhüllen, so dass der bei der Arbeit mit dem Werkzeuggerät entstehende Staub aus der Haube abgesaugt werden kann, wenn die Haube beispielsweise mit einer Staubsaugvorrichtung verbunden ist. Bei dem Arbeitsmittel des Werkzeuggeräts kann es sich beispielsweise um das Sägeblatt einer Säge oder um die Trenn- oder Schleifscheibe eines Winkelschleifers handelt. Solche Arbeitsmittel werden im Sinne der Erfindung als im Wesentlichen scheibenförmige Arbeitsmittel bezeichnet. Sie weisen üblicherweise eine im Wesentlichen kreisförmige Grundfläche auf, wobei diese Arbeitsmittel in der Regel bei Betrieb des Werkzeuggeräts zu einer Rotation um eine zentrale Achse des Arbeitsmittels veranlasst werden.

Die konventionellen Staubhauben, die aus dem Stand der Technik bekannt sind, werden zumeist aus Kunststoff hergestellt und können nachteiligerweise nicht an verschiedene Umgebungsbedingungen oder Arbeits- und/oder Betriebsparameter des Werkzeuggeräts angepasst werden. Insbesondere nutzen konventionelle Absaughauben für Werkzeuggeräte mit scheibenförmigen Arbeitsmitteln häufig identische Absaugöffnungen, d.h. das bei Betrieb des Werkzeuggeräts entstehende Staub-Luft-Gemisch wird durch immer die gleichen Öffnungen ins Innere der Staubhaube gesaugt und von dort unter Verwendung einer Staubsaugvorrichtung entfernt. Nachteilig an diesen konventionellen Staubhauben ist, dass ihr Absaugverhalten nicht an sich gegebenenfalls ändernde Umgebungsbedingungen, Arbeits- und/oder Betriebsparameter des Werkzeuggeräts angepasst werden kann. Allerdings wurde festgestellt, dass sich der Staubaustrag beim Betrieb eines Werkzeuggeräts stark ändern kann. Beispielsweise kann der Staubaustrag von verschiedenen Parametern, wie der Arbeitstiefe des Werkzeuggeräts, dem Austrittswinkel des Staubs oder der Position des Werkzeuggeräts in Bezug auf die Staubhaube, abhängen.

Eine besondere Herausforderung stellen in diesem Zusammenhang Werkzeuggeräte mit scheibenförmigem Arbeitsmittel, bei denen sich das Arbeitsmittel in die Richtung dreht, in die auch das Werkzeuggerät als Ganzes bewegt wird. Im Sinne der Erfindung wird diese Betriebsweise des Werkzeuggeräts, bei der Drehrichtung des Arbeitsmittels und Bewegungsrichtung des Werkzeuggeräts im Wesentlichen zusammenfallen, als "Gleichlauf" bezeichnet. Insbesondere sind in diesem Fall die Drehrichtung des Arbeitsmittels und die Bewegungsrichtung des Werkzeuggeräts gleichgerichtet. Tests haben gezeigt, dass die Stauberfassung bei Werkzeuggeräten, die in der Gleichlauf-Betriebsweise betrieben werden, häufig durch einen der Stauberfassung zuwiderlaufenden Staubaustrag erschwert wird. Mit anderen Worten ist es beispielsweise aufgrund der Richtung und des Austrittswinkels des Staubs bei gleichlaufend betriebenen Werkzeuggeräten besonders schwierig und aufwändig, den Staub vollumfänglich und wirksam zu erfassen, um ihn davon abzuhalten, in die Atemwege eines Menschen zu gelangen.

Es ist daher Aufgabe der vorliegenden Erfindung, die vorstehend beschriebenen Nachteile konventioneller Staubhauben zu überwinden und eine Staubhaubenvorrichtung bereitzustellen, die ein verbessertes Absaugverhalten insbesondere bei gleichlaufend betriebenen Werkzeuggeräten ermöglicht. Darüber hinaus soll mit der vorliegenden Erfindung ein verbessertes Absaugverhalten in dem Sinne erreicht werden, dass eine Möglichkeit zur Anpassung des Stauberfassungsvorgangs an unterschiedliche Umgebungsbedingungen, Arbeits- und/oder Betriebsparameter des Werkzeuggeräts geschaffen wird.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Die Aufgabe wird gelöst durch eine Staubhaubenvorrichtung für ein Werkzeuggerät, wobei die Staubhaubenvorrichtung eine Unterseite aufweist. Die Staubhaubenvorrichtung ist dadurch gekennzeichnet, dass sie auf ihrer Unterseite mindestens eine erste Öffnung und eine zweite Öffnung zur Erfassung von Staub aufweist, wobei ein durch die Stauberfassung entstehendes Gemisch aus Staub und Luft in verschiedenen Luftströmungen durch das Innere der Staubhaubenvorrichtung in Richtung eines Absaugstutzens führbar ist, wobei die Luftströmungen im Inneren der Staubhaubenvorrichtung von mindestens einem Führungselement voneinander trennbar sind. In einem besonders bevorzugten Ausführungsbeispiel der Erfindung ist es bevorzugt, dass die beiden Öffnungen zum Einsaugen von Staubpartikeln eingerichtet sind, wobei das entstehende Gemisch aus Staub und Luft in verschiedenen Luftströmungen durch das Innere der Staubhaubenvorrichtung in Richtung eines Absaugstutzens geführt werden kann und wobei die Luftströmungen im Inneren der Staubhaubenvorrichtung von mindestens einem Führungselement voneinander getrennt werden können.

Es ist im Sinne der Erfindung bevorzugt, dass die Staubhaubenvorrichtung mindestens ein Führungselement zur Trennung von Luft- oder Absaugströmungen umfasst, das vorzugsweise im Inneren der Staubhaubenvorrichtung angeordnet vorliegt. Vorzugsweise ist das Führungselement dazu eingerichtet, die Luftströmungen, die durch das Einsaugen des Staub-Luft-Gemischs durch die verschiedenen Öffnungen der Staubhaubenvorrichtung erzeugt werden, voneinander zu trennen. Vorzugsweise können die Luftströmungen getrennt voneinander durch das Innere der Staubhaube geführt werden. Durch die Trennung der verschiedenen Absaugströmungen kann vorteilhafterweise erreicht werden, dass die mindestens zwei Öffnungen auf der Unterseite der Staubhaubenvorrichtung unabhängig voneinander geschaltet werden können. Dies bedeutet im Sinne der Erfindung bevorzugt, dass die erste und die zweite Öffnung der Staubhaubenvorrichtung unabhängig voneinander geöffnet und geschlossen werden können, wodurch überraschenderweise die Absaugleistungen der einzelnen Öffnungen deutlich gesteigert werden kann. Insbesondere kann mit dem unabhängigen Schalten der Öffnungen auf sich ändernde Umgebungsbedingungen des Werkzeuggeräts reagiert werden. Insbesondere können unterschiedliche Öffnungen der Staubhaubenvorrichtung geöffnet oder geschlossen werden in Abhängigkeit von einer Arbeitstiefe des Werkzeuggeräts bzw. seines Arbeitsmittels. Es ist im Sinne der Erfindung bevorzugt, dass das Öffnen bzw. Schließen der Absaugöffnungen durch das "Eintauchen" des Werkzeugs in den Untergrund bewirkt wird. Beispielsweise sind im Vollschnitt-Modus bis auf den mittigen Schlitz für das Werkzeug alle weiteren Absaugöffnungen verschlossen.

Es war vollkommen überraschend, dass durch die Vorsehung der zwei Öffnungen in der Unterseite der Staubhaubenvorrichtung und die Trennung der Luftströmungen innerhalb der Staubhaubenvorrichtung eine besonders wirksame Stauberfassung ermöglicht werden kann, insbesondere wenn es sich um ein Werkzeuggerät handelt, dass in der Gleichlauf-Betriebsweise betrieben wird. Insbesondere ermöglicht die Vorsehung der Öffnungen sowie die Trennung der resultierenden Absaugströmungen, dass die Öffnungen unabhängig voneinander geöffnet und geschlossen werden können. Dadurch kann mit der Erfindung auf unterschiedliche Umgebungsbedingungen und Betriebsparameter des Werkzeuggeräts reagiert werden, beispielsweise indem einzelne Öffnungen zu unterschiedlichen Zeiten geöffnet oder geschlossen werden. Es ist im Sinne der Erfindung ganz besonders bevorzugt, dass die erste und die zweite Öffnung der Staubhaubenvorrichtung in einem Einschnittmodus des Werkzeuggeräts geöffnet sind und in einem Vollschnittmodus des Werkzeuggeräts nur die erste Öffnung der Staubhaubenvorrichtung geöffnet ist. Darüber hinaus kann mit der Erfindung überraschenderweise eine verbesserte Stauabsaugeffizienz bereitgestellt werden, insbesondere bei Gleichlauf-Werkzeuggeräten, indem im Kontext der Erfindung durch die Vorsehung der mindestens zwei Öffnungen und des mindestens einen Führungselements aufgeteilte Absaugkanäle bereitgestellt werden.

Insbesondere ist die vorgeschlagene Staubhaubenvorrichtung dazu eingerichtet, zwischen unterschiedlichen Betriebsweisen des Werkzeuggeräts zu unterscheiden, wie zum Beispiel dem Vollschnittmodus und dem Einschnittmodus. Die Unterscheidung zwischen den unterschiedlichen Betriebsmodi des Werkzeuggeräts beruht insbesondere auf einem Anstellwinkel der Ansaughaube bzw. seiner Änderung. Mit anderen Worten kann die Unterscheidung der unterschiedlichen Betriebsweisen des Werkzeuggeräts in Abhängigkeit von einem Anstellwinkel der Staubhaubenvorrichtung erfolgen. Es ist im Sinne der Erfindung insbesondere bevorzugt, dass durch eine Änderung dieses Anstellwinkels die unterschiedlichen Ansaugkanäle der Staubhaube geöffnet oder geschlossen werden. Der Anstellwinkel wird vorzugsweise zwischen einer Unterseite der Staubhaube und dem Arbeitsmittel gebildet. Wenn es sich bei dem Arbeitsmittel um ein scheibenförmiges Sägeblatt handelt, kann der Anstellwinkel zwischen einem Radius des Sägeblattes und der Haubenunterseite gebildet werden.

Diese beiden Betriebsweisen sollen im Folgenden für das Ausführungsbeispiel, dass es sich bei dem Werkzeuggerät um eine Säge handelt, erläutert werden: Es ist im Sinne der Erfindung bevorzugt, dass sich die Sage bzw. das Sägeblatt als Arbeitsmittel der Säge im Einschnittmodus in das zu zerteilende oder zu zersägende Material hineinarbeitet, wobei es noch nicht die maximale Arbeits- oder Schnitttiefe erreicht hat. Insbesondere erfolgt im Einschnittmodus der Anschnitt des zu bearbeitenden Werkstücks. Der Einschnittmodus liegt vorzugsweise zu Beginn einer Säge- oder Trennarbeit vor. Der Vollschnittmodus ist vorzugsweise dadurch gekennzeichnet, dass eine maximale Arbeits- oder Schnitttiefe des Werkzeuggeräts erreicht ist. Der Vollschnittmodus wird daher vorzugsweise nach abgeschlossenem Anschnitt bzw. nach abgeschlossener Anschnittphase des Werkstücks vor.

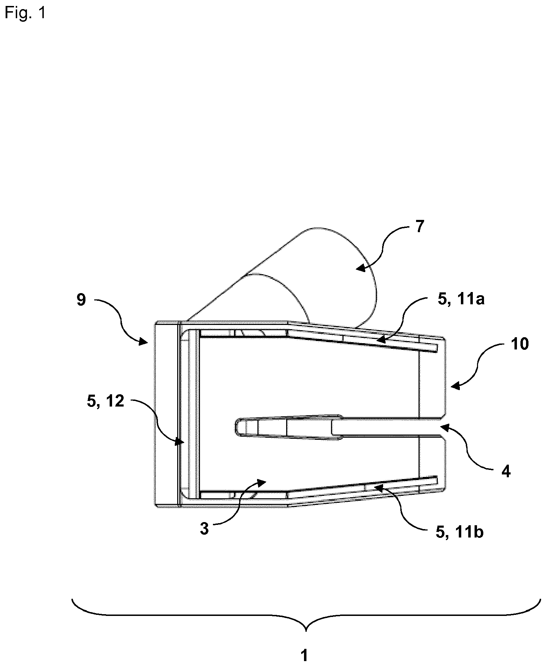

Es ist im Sinne der Erfindung bevorzugt, dass der Begriff "Staubhaube" synonym verwendet wird zu dem Begriff "Staubhaubenvorrichtung". Vorzugsweise kann die Unterseite der Staubhaubenvorrichtung einem Arbeitsmittel des Werkzeuggeräts zugewandt sein. Die Luftströmungen können im Sinne der Erfindung auch als Absaugströmungen bezeichnet werden. Die erste Öffnung der vorgeschlagenen Staubhaube kann vorzugsweise auch als Hauptkanal, Einführschlitz für das Arbeitsmittel des Werkzeugs oder Schnittspalt bezeichnet werden. Die zweite Öffnung kann vorzugsweise Seitenkanäle und eine vordere Schlitzöffnung umfassen. Mit anderen Worten ist es im Sinne der Erfindung bevorzugt, dass die zweite Öffnung von zwei Seitenkanälen und einer vorderen Schlitzöffnung gebildet wird. Die Unterseite der Staubhaube weist vorzugsweise eine im Wesentlichen rechteckige Grundfläche auf, wobei sich die sich gegenüberliegenden längeren Seitenkanten dieser vorzugsweise im Wesentlichen rechteckige Grundfläche beispielsweise in einem hinteren Bereich der Staubhaubenvorrichtung bzw. der Unterseite der Staubhaube verjüngen, d.h. leicht aufeinander zu bewegen können. Diese Verjüngung der Seitenkanten wird beispielsweise in Figur 1 dargestellt. Entlang der Seitenkanten der Staubhaube bzw. der Unterseite der Staubhaubenvorrichtung verlaufen vorzugsweise die Seitenkanäle, die zusammen mit einer vorderen Schlitzöffnung die zweite Öffnung der Staubhaube bilden. Die Seitenkanäle können in ihrem Verlauf einen leichten Knick aufweisen, mit dem die Seitenkanäle dem Verlauf der sich vorzugsweise verjüngenden Seitenkanten folgen. Ein Abstand zwischen den Seitenkanälen und den Seitenkanten der Staubhaube kann beispielsweise bei 3 mm liegen. Mit anderen Worten kann eine bevorzugte Wandstärke der Seitenkanten der Staubhaubenvorrichtung ca. 3 mm betragen.

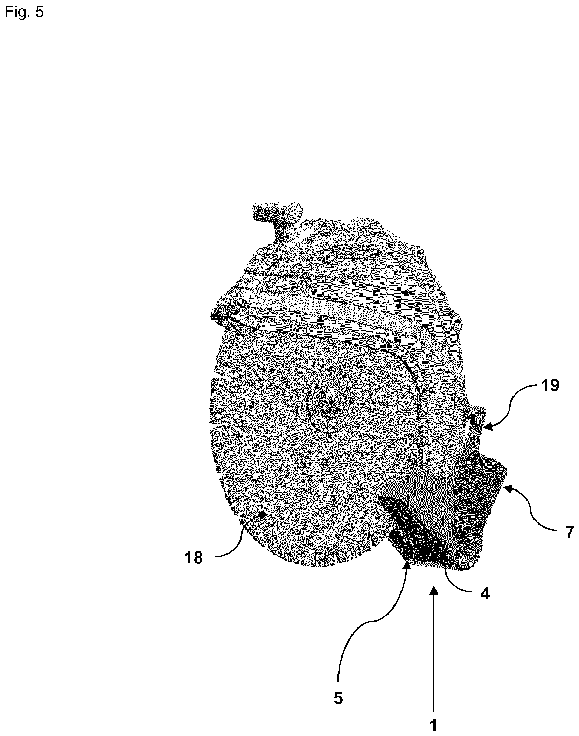

Die Seitenkanäle verlaufen in einem vorderen Bereich der Staubhaubenvorrichtung vorzugsweise im Wesentlichen parallel, während sie sich in einem hinteren Bereich der Staubhaube leicht aufeinander zu bewegen, ohne sich jedoch zu berühren. Im vorderen Bereich kann die Staubhaube eine abgerundete Form aufweisen, die üblicherweise im Betrieb des Werkzeuggeräts dem Arbeitsmittel des Werkzeuggeräts abgewandt ist. Ein hinterer Bereich der Staubhaube ist vorzugsweise eben ausgebildet und liegt bei Betrieb des Werkzeuggeräts in einem Bereich des Arbeitsmittels des Werkzeuggeräts vor. Eine mögliche Anordnung von Staubhaube und Werkzeuggerät bzw. dessen Arbeitsmittel wird in Figur 5 dargestellt. Bei dem in Figur 5 dargestellten Ausführungsbeispiel der Erfindung wird das Werkzeuggerät von einer Säge gebildet und das Arbeitsmittel von einem Sägeblatt. Der hintere Bereich der Staubhaubenvorrichtung liegt in dem in Figur 5 darstellten Anordnungsbeispiel auf Höhe des Sägeblattes vor, während die in Figur 5 nicht dargestellte vordere Seite der Staubhaubenvorrichtung dem Sägeblatt abgewandt ist.

In dem vorderen Bereich weist die Staubhaube auf ihrer Unterseite eine Schlitzöffnung auf, die aufgrund ihrer Anordnung im vorderen Bereich der Staubhaubenvorrichtung vorzugsweise auch als "vordere Schlitzöffnung" bezeichnet wird. Die beiden Begriffe "Schlitzöffnung" und "vordere Schlitzöffnung" werden im Kontext der vorliegenden Erfindung vorzugsweise synonym verwendet. Die Schlitzöffnung bildet vorzugsweise mit den beiden Seitenkanälen eine umlaufende Absaugöffnung, die einen mittleren Bereich der Unterseite der Staubhaube an drei Seiten umschließt. Insbesondere begrenzen die Seitenkanäle den mittleren Bereich der Unterseite der Staubhaube an den langen Seiten der Unterseite der Staubhaubenvorrichtung, während die Schlitzöffnung den mittleren Bereich der Unterseite der Staubhaube an der vorderen Seite der Staubhaube begrenzt. Allerdings liegen die beiden Seitenkanäle und die vordere Schlitzöffnung der zweiten Öffnung im Inneren der Staubhaube vorzugsweise getrennt voneinander vor, wobei diese Trennung durch das Führungselement bewirkt wird. Die vordere Schlitzöffnung speist vorzugsweise einen ersten Luftkanal, während die Seitenkanäle und die erste Öffnung der Staubhaubenvorrichtung einen zweiten Luftkanal speisen, wobei die beiden Luftkanäle vorzugsweise durch das bevorzugt gebogen ausgebildete Führungselement voneinander getrennt werden. Es ist im Sinne der Erfindung besonders bevorzugt, dass die zweite Öffnung der Staubhaube von einer umlaufenden Absaugöffnung gebildet wird, die vorzugsweise drei kanalartig ausgebildete Einzelabschnitte umfasst, die als erster Seitenkanal, zweiter Seitenkanal und vordere Schlitzöffnung bezeichnet werden. Der Begriff «speisen» bedeutet im Sinne der Erfindung bevorzugt, dass das Staub-Luft-Gemisch, das beispielsweise durch die vordere Schlitzöffnung eingesaugt wird, den ersten Luftkanal speist, d.h. durch den ersten Luftkanal zum Absaugstutzen geführt wird. Das Staub-Luft-Gemisch, das durch die erste Öffnung und die Seitenkanäle der Staubhaube eingesaugt wird, passiert vorzugsweise durch den zweiten Luftkanal das Innere der Staubhaube, bevor es zum Absaugstutzen gelangt.

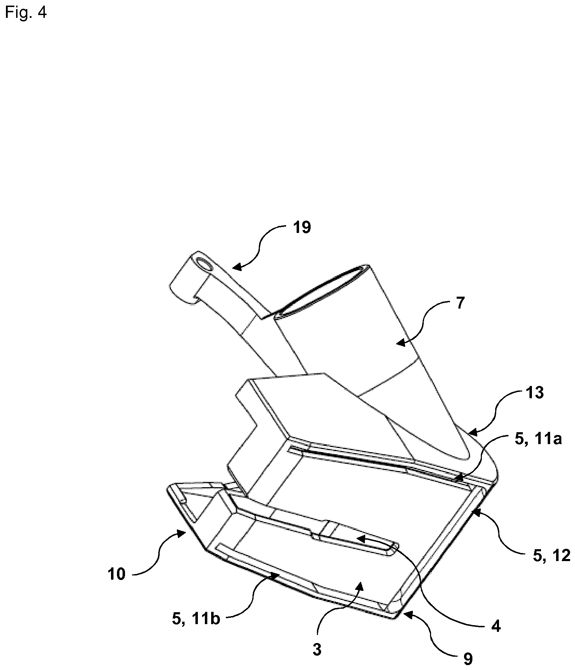

Es ist im Sinne der Erfindung bevorzugt, dass die erste Öffnung der Staubhaube einen Hauptkanal umfasst, der vorzugsweise auch als Einführschlitz für das Arbeitsmittel des Werkzeugs oder als Schnittspalt bezeichnet wird. Die Ausgestaltung und Anordnung dieses Hauptkanals wird beispielsweise in den Figuren 1 oder 4 dargestellt, die Abbildungen eines Ausführungsbeispiels der Erfindung von unten zeigen. Die erste Öffnung der Staubhaube ist vorzugsweise dazu eingerichtet, zumindest teilweise das Arbeitsmittel des Werkzeuggeräts aufzunehmen. Wenn das Werkzeuggerät eine Säge ist, ist es im Sinne der Erfindung bevorzugt, dass sich das Sägeblatt der Säge in dem Hauptkanal drehen kann. Vorzugsweise rotiert das Sägeblatt der Säge im Kontext der vorliegenden Erfindung gleichlaufend mit der Bewegungsrichtung der Sage, so dass die Staubhaube in Bezug auf die Säge und das Sägeblatt so angeordnet ist, dass das Sägeblatt vorzugsweise von unterhalb der Unterseite der Staubhaube kommend durch die Staubhaube geführt wird.

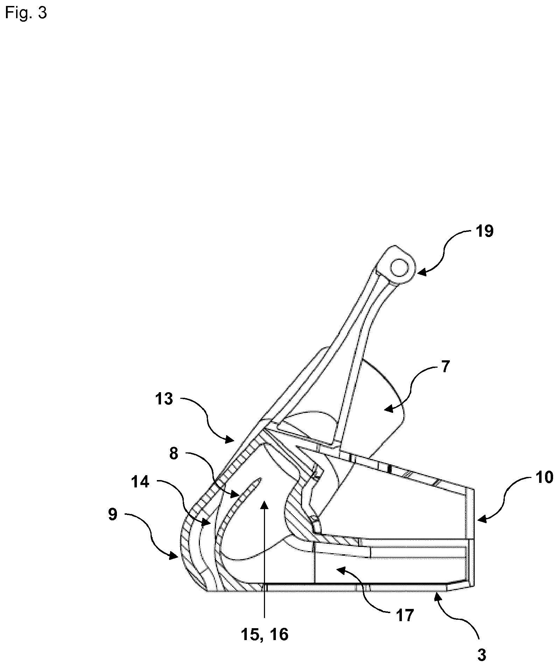

Es ist im Sinne der Erfindung bevorzugt, dass die Staubhaube einen Absaugstutzen umfasst, mit dem die Staubhaubenvorrichtung mit einer Staubsaugvorrichtung verbunden werden kann. Vorzugsweise ist der Absaugstutzen als Verlängerung des gerundeten vorderen Bereichs der Staubhaube ausgebildet, so dass das bei der Stauberfassung aufgenommen Staub-Luft-Gemisch besonders störungs- und verwirbelungsarm durch das Innere der Staubhaubenvorrichtung geführt werden kann. Vorzugsweise umfasst die Staubhaube ein Gehäuse, das einen Innenraum der Staubhaube umschließt. Das Gehäuse umfasst bevorzugt eine Unterseite, die ihrerseits die mindestens erste und zweite Öffnung der Staubhaube umfasst. Ferner umfasst das Gehäuse der Staubhaube einen hinteren Bereich, der im Wesentlichen eben bzw. flach ausgebildet ist, sowie einen vorderen Bereich, der eine Rundung ausweist, um die Luftströmungen optimal innerhalb der Staubhaubenvorrichtung zu führen. Der vordere Bereich der Staubhaube bzw. des Gehäuses der Staubhaube kann vorzugsweise von einer Vorderwand bzw. einer vorderen Außenwand gebildet werden. Das Gehäuse kann darüber hinaus einen Absaugstutzen zur Verbindung der Staubhaube mit einer Staubsaugvorrichtung umfassen. Die Staubhaubenvorrichtung bzw. ihr Gehäuse können ferner Mittel zur Befestigung der Staubhaube an dem Werkzeuggerät umfassen. Diese Befestigungsmittel werden beispielsweise in Figur 3 oder 4 dargestellt. Sie können hebelartig ausgebildet sein und in einem oberen Abschlussbereich eine Öffnung zur Aufnahme eines Verbindungsmittels, wie einer Schraube, aufweisen. Es können allerdings im Kontext der vorliegenden Erfindung auch andere Befestigungsweisen zum Einsatz kommen, um die Staubhaubenvorrichtung mit dem Werkzeuggerät zu verbinden.

Es ist im Sinne der Erfindung bevorzugt, dass sich das mindestens eine Führungselement ausgehend von der Unterseite der Staubhaubenvorrichtung in das Innere der Staubhaubenvorrichtung erstreckt. In einem oberen Bereich folgt das Führungselement im Wesentlichen dem Verlauf der vorderen Außenwand der Staubhaube. Das bedeutet im Sinne der Erfindung bevorzugt, dass ein oberer Abschnitt des Führungselements und die Vorderwand des Gehäuses der Staubhaubenvorrichtung im Wesentlichen parallel verlaufen können. Vorzugsweise ist das Führungselement gebogen bzw. geschwungen ausgebildet. Mit anderen Worten ist das Führungselement gebogen ausgebildet, wobei das Führungselement in einem oberen Bereich im Wesentlichen dem Verlauf einer vorderen Außenwand der Staubhaube folgt. Vorzugsweise ist das Führungselement dazu eingerichtet, einen ersten Luftkanal im Inneren der Staubhaubenvorrichtung von einem zweiten Luftkanal zu trennen. Mit anderen Worten ist das Führungselement dazu eingerichtet, den Innenraum der Staubhaubenvorrichtung in einen ersten Luftkanal und einen zweiten Luftkanal zu unterteilen. Vorzugsweise wird der erste Luftkanal von einer ersten Luftströmung durchströmt, die von dem Staub-Luft-Gemisch gebildet wird, das durch die vordere Schlitzöffnung der zweiten Öffnung eingesaugt wird. Es ist im Sinne der Erfindung darüber hinaus bevorzugt, dass der zweite Luftkanal von einer zweiten Luftströmung durchströmt, die von dem Staub-Luft-Gemisch gebildet wird, das durch die zwei Seitenkanäle der zweiten Öffnung und die erste Öffnung der Staubhaube eingesaugt wird. Vorzugsweise münden beide Luftkanäle in dem Absaugstutzen, so dass das eingesogene Staub-Luft-Gemisch im Wesentlichen vollständig mit Hilfe einer Staubsaugvorrichtung aus dem Innenraum der Staubhaube entfernt werden kann.

Vorzugsweise umfasst der zweite Luftkanal, durch den bevorzugt die zweite Luftströmung strömt, einen oberen Absaugbereich, der getrennt von dem Führungselement und neben dem ersten Luftkanal angeordnet vorliegt. Darüber hinaus umfasst der zweite Luftkanal einen Sammelbereich, der vorzugsweise oberhalb der Unterseite der Staubhaube in deren Innenraum angeordnet vorliegt. Sowohl der erste, als auch der zweite Luftkanal können mit Hilfe der Staubsaugvorrichtung mit einem Unterdruck beaufschlagt werden. Durch diesen vorzugsweise von der Staubsaugvorrichtung erzeugten Unterdruck können die Luftströmungen im Inneren der Staubhaube, die zur Stauberfassung dienen, erzeugt werden. Es ist im Sinne der Erfindung bevorzugt, dass die vorgeschlagene Staubhaube zusätzlich zu einer Staubhaube verwendet wird, die das Arbeitsmittel des Werkzeuggeräts umgibt. Diese Arbeitsmittel-Staubhaube kann beispielsweise auch als kombinierter Blattschutz des bevorzugt scheibenförmig ausgebildeten Arbeitsmittels dienen. Das Zusammenspiel von vorgeschlagenen Staubhaube, Arbeitsmittel-Staubhaube und Arbeitsmittel des Werkzeuggeräts wird in Figur 5 dargestellt. Es ist mit anderen Worten im Sinne der Erfindung ganz besonders bevorzugt, die vorgeschlagene Staubhaubenvorrichtung als zusätzliche Staubhaube in Verbindung bzw. Ergänzung zu einer bereits vorhandenen Staubhaubenvorrichtung für das Arbeitsmittel des Werkzeuggeräts zu verwenden. Die vorgeschlagene Staubhaubenvorrichtung kann in diesem Sinne vorzugsweise als Staubhaubenerweiterung betrachtet werden, wobei mit ihr ein deutlich verbessertes Absaugverhalten, insbesondere bei gleichlaufend drehendem Arbeitsmittel des Werkzeuggeräts erreicht werden kann.

Es hat sich gezeigt, dass der vorzugsweise von einer Staubsaugvorrichtung kommende Unterdruck, mit dem der Innenraum der Staubhaube beaufschlagt werden kann, in einem vorderen Bereich der Staubhaube maximal ist. Dieser vordere Bereich der Staubhaubenvorrichtung ist vorzugsweise hinter der vorderen Außenwand der Staubhaube angeordnet, die vorzugsweise abgerundet ausgebildet ist. Insbesondere wird dieser vordere Bereich der Staubhaube von der Vorderwand der Staubhaube auf der einen Seite und dem Führungselement auf der anderen Seite begrenzt. Den unteren Abschluss dieses Bereichs der Staubhaubenvorrichtung bildet bevorzugt die vordere Schlitzöffnung der zweiten Öffnung der vorgeschlagenen Staubhaube, während sein vorderer Bereich nach oben hin in den Absaugstutzen mündet. Das Führungselement ist vorzugsweise so in dem Innenraum der Staubhaube angeordnet, dass die Strömungsgeschwindigkeiten bzw. die Druckverhältnisse im ersten Luftkanal und im zweiten Luftkanal vergleichbar groß sind bzw. ähnliche Größenordnungen aufweisen. Damit wird insbesondere im Einschnittmodus des Werkzeuggeräts erreicht, dass von den verschiedenen Öffnungen der Staubhaube eine im Wesentlichen gleich große Ansaugkraft auf Staubpartikel ausgeht. Dadurch wird der Vorteil realisiert, dass ein besonders gleichmäßiges Absaugen des Staubs ermöglicht wird. Es ist im Sinne der Erfindung insbesondere bevorzugt, dass die Dimensionen und Abmessungen der Luftkanäle und der entsprechenden Öffnungen so aufeinander abgestimmt sind, dass Staubpartikel mit vergleichbaren Ansaugkräften in die unterschiedlichen Öffnungen der Staubhaube eingesaugt werden. Insbesondere liegt das Führungselement so im Inneren der Staubhaubenvorrichtung vor, dass sowohl die Druckverhältnisse, als auch die Abmessungen der Öffnungen bei der Bestimmung der Lage des Führungselements berücksichtigt werden. Mit anderen Worten ist es im Sinne der Erfindung bevorzugt, dass eine Position des Führungselements im Innenraum der Staubhaube in Abhängigkeit von den Druckverhältnissen bzw. den Dimensionen und Abmessungen der Öffnungen der Staubhaube ausgewählt werden kann.

In einem zweiten Aspekt betrifft die Erfindung eine Verwendung einer Staubhaubenvorrichtung, wobei die Staubhaubenvorrichtung an einer Unterseite mindestens eine erste Öffnung und eine zweite Öffnung umfasst. Die Verwendung erfolgt insbesondere in Verbindung mit einem Werkzeuggerät und/oder einer Staubhaubenvorrichtung für das Arbeitsmittel des Werkzeuggeräts. Es kann im Sinne der Erfindung bevorzugt sein, dass für die Verwendung eine vorgeschlagene Staubhaubenvorrichtung verwendet wird. Es kann aber auch bevorzugt sein, dass für die vorgeschlagene Verwendung eine Staubhaubenvorrichtung verwendet wird, die auf einer Unterseite mindestens zwei Öffnungen zum Einsaugen von Staub oder Staubpartikeln aufweist. Insbesondere kann die Staubhaubenvorrichtung mit einer ersten und einer zweiten Öffnung als zusätzliche Staubhaubevorrichtung in Ergänzung zu einer bereits vorhandenen Staubhaubenvorrichtung für das Arbeitsmittel des Werkzeuggeräts verwendet werden. Eine mögliche Positionierung des Führungselements innerhalb der Staubhaube zeigt zum Beispiel Figur 3.

Es ist im Sinne der Erfindung bevorzugt, dass das Werkzeuggerät ein im Wesentlichen scheibenförmiges Arbeitsmittel umfasst. Insbesondere kann es sich bei dem Werkzeuggerät mit dem im Wesentlichen scheibenförmig ausgebildeten Arbeitsmittel um eine Säge handeln. Das Arbeitsmittel des Werkzeuggeräts kann beispielsweise das Sägeblatt der Säge sein. Es ist im Sinne der Erfindung ferner bevorzugt, dass eine Drehrichtung des Arbeitsmittels des Werkzeugs und eine Vorschubrichtung des Werkzeuggeräts gleichgerichtet sind. Die Gleichgerichtetheit der Drehrichtung des Arbeitsmittels des Werkzeugs und der Vorschubrichtung des Werkzeuggeräts wird im Sinne der Erfindung bevorzugt auch als "Gleichlauf" der Drehrichtung des Arbeitsmittels des Werkzeugs und der Vorschubrichtung des Werkzeuggeräts bezeichnet. Insbesondere wird die Drehrichtung des Arbeitsmittels des Werkzeugs als Gleichlauf-Drehrichtung bezeichnet. Die vorgeschlagene Erfindung ermöglicht einen Gleichlaufbetrieb des Werkzeuggeräts, obwohl eine Gleichlauf-Drehrichtung des Arbeitsmittels des Werkzeugs als nicht optimal für das Einsaugen für Staubpartikel erkannt wurde. Insbesondere durch die Vorsehung der beiden Öffnung auf der Unterseite der vorgeschlagenen Staubhaubenvorrichtung, sowie der Vorsehung des mindestens einen Führungselements kann eine optimale Einsaugleistung in Bezug auf Staubpartikel ermöglicht werden, selbst wenn das Werkzeuggerät in einem dafür nicht optimalen Gleichlauf-Betrieb betrieben wird. Insofern stellt die Verwendung einer Staubhaubenvorrichtung mit Öffnungen auf ihrer Unterseite in Verbindung mit einem Werkzeuggerät in Gleichlauf-Betriebsweise eine Abkehr vom Stand der Technik dar, weil die Fachwelt bisher davon ausgegangen war, dass im Falle einer Gleichlauf-Betriebsweise eines Arbeitsgeräts eine effektive Stauberfassung bzw. Staubabsaugung mit einer Staubhaube nicht gewährleistet werden kann. Die Anordnung der Bestandteile der vorgeschlagenen Staubhaube zueinander und ihr Zusammenwirken sind vorzugsweise so aufeinander abgestimmt, dass insbesondere den besonderen strömungsmechanischen Gegebenheiten in einer Gleichlauf-Betriebsweise eines Werkzeuggeräts Rechnung getragen werden kann.

In einem besonders bevorzugten Ausführungsbeispiel der Erfindung sind insbesondere eine Drehrichtung des Sägeblatts einer Säge und eine Vorschubrichtung der Säge gleichgerichtet. Insbesondere wird eine Drehrichtung des Sägeblattes der Säge als Gleichlauf-Drehrichtung des Sägeblattes bezeichnet. Mit anderen Worten wird die vorgeschlagene Staubhaubenvorrichtung vorzugsweise in Verbindung mit einer Säge und/oder einer Staubhaubenvorrichtung für ein Sägeblatt der Säge verwendet, wobei eine Drehrichtung des Sägeblattes der Sage und eine Vorschubrichtung der Säge gleichgerichtet sind. Insbesondere wird die vorgeschlagene Staubhaube in Ergänzung zu einer bereits vorhandenen Staubhaubenvorrichtung für das Sägeblatt der Säge verwendet, wobei die bereits vorhandene Staubhaube vorzugsweise dazu eingerichtet ist, das Sägeblatt der Säge im Wesentlichen vollständig zu umgeben und den Staub einzusaugen, der in der Umgebung des Sägeblatts entsteht bzw. aufgewirbelt wird. Vorteilhafterweise ermöglicht die vorgeschlagene Staubhaube durch die Vorsehung der beiden Öffnung auf ihrer Unterseite, sowie der Vorsehung des mindestens einen Führungselements in ihrem Inneren ein optimales Einsaugen von Staub und Staubpartikel, selbst wenn die Säge in einem dafür nicht optimalen Gleichlauf-Betrieb betrieben wird. Beispielsweise kann die Säge in diesem Ausführungsbeispiel in eine Raumrichtung "nach vorne" bewegt werden, wenn sie zum Sägen verwendet wird. Der Gleichlauf-Betrieb der Säge bedeutet im Sinne der Erfindung bevorzugt, dass sich auch das Sägeblatt der Säge in eine Raumrichtung "nach vorne" dreht, so dass Drehrichtung des Sägeblatts und Bewegungsrichtung der Säge gleichgerichtet in eine Raumrichtung "nach vorne" sind. Im Sinne der Erfindung kann die Raumrichtung "nach vorne" damit gleichgesetzt werden, dass das Werkzeuggerät von einem Benutzer wegbewegt wird, während bei einer Bewegung des Werkzeuggeräts "nach hinten" das Werkzeuggerät in Richtung eines Benutzers bewegt wird. Eine Raumrichtung "nach unten" wird im Sinne der Sinne durch die Position bzw. Lage der Unterseite der Staubhaubenvorrichtung festgelegt, während die Raumrichtung "nach oben" beispielsweise dadurch definiert werden kann, dass der Absaugstutzen bzw. das Befestigungsmittel in die Raumrichtung "nach oben" weisen. Insofern sind die genannten Raumrichtungen und Ortsangaben keine unklaren Begriffe für den Fachmann.

In einer bevorzugten Ausgestaltung der Erfindung liegen in einem Einschnittmodus des Werkzeuggeräts die erste und die zweite Öffnung der Staubhaubenvorrichtung geöffnet vor. Dies ist insbesondere während der Stauberfassung der Fall. Es ist bevorzugt, dass im Kontext der vorliegenden Erfindung die Öffnungen auf der Unterseite der vorgeschlagenen Staubhaube in Abhängigkeit von einer Arbeitstiefe des Werkzeuggeräts geöffnet und geschlossen werden können. Die Erfindung ermöglicht es insbesondere, ein Öffnen und Schließen der ersten und/oder der zweiten Öffnung der Staubhaubenvorrichtung so zu steuern, dass in einem Einschnittmodus des Werkzeuggeräts die erste und die zweite Öffnung der Staubhaubenvorrichtung geöffnet sind bzw. dass in einem Vollschnittmodus nur die erste Öffnung der Staubhaubenvorrichtung geöffnet werden kann. Mit anderen Worten ist die vorgeschlagene Staubhaube dazu eingerichtet, dass ihre Öffnungen in Abhängigkeit von einer Schnitttiefe geöffnet und geschlossen werden können, wenn es sich bei dem Werkzeuggerät um eine Säge handelt. Insbesondere ist es im Sinne der Erfindung bevorzugt, dass in einem Vollschnittmodus der Schnittspalt, der vorzugsweise die erste Öffnung des Staubhaube bildet, allein geöffnet ist, während die zweite Öffnung, die vorzugsweise zwei Seitenkanäle und eine vordere Schlitzöffnung umfasst, geschlossen ist. Vorzugsweise sind in einem Einschnittmodus die erste und die zweite Öffnung der Staubhaube geöffnet, d.h. sowohl der Hauptkanal, der vorzugsweise die erste Öffnung der Staubhaube bildet, als auch die Seitenkanäle und die vordere Schlitzöffnung, die vorzugsweise die zweite Öffnung bilden.

Vorzugsweise ist in einem Vollschnittmodus nur die erste Öffnung der Staubhaubenvorrichtung geöffnet. Dadurch wird vorteilhafterweise eine sehr hohe Strömungsgeschwindigkeit in der Absaugströmung, die von der ersten Öffnung hervorgerufen wird, erreicht. Durch die hohe Strömungsgeschwindigkeit in dem Luftstrom, der von der ersten Öffnung gespeist wird, wird eine besonders gute und effektive Stauberfassung während des Betriebs der Säge im Vollschnittmodus erreicht.

In einem weiteren Aspekt betrifft die Erfindung ein Verfahren zur Erfassung von Staub durch eine Staubhaubenvorrichtung, wobei die Staubhaubenvorrichtung an einer Unterseite mindestens eine erste Öffnung und eine zweite Öffnung umfasst. Das Verfahren umfasst die folgenden Schritte:
a) Bereitstellung einer Staubhaubenvorrichtung mit mindestens einer ersten Öffnung und einer zweiten Öffnung,
b) Befestigung der Staubhaubenvorrichtung an einem Werkzeuggerät,
c) Betrieb des Werkzeuggeräts, wobei das Werkzeuggerät insbesondere in einem Einschnittmodus und in einem Vollschnittmodus betrieben werden kann,
d) Öffnen der ersten Öffnung in einem Vollschnittmodus des Werkzeuggeräts oder
e) Öffnen der ersten und der zweiten Öffnung in einem Einschnittmodus des Werkzeuggeräts.

Es ist im Sinne der Erfindung ganz besonders bevorzugt, dass das Werkzeuggerät in der Gleichlauf-Betriebsweise betrieben wird. Wenn das Werkzeuggerät gemäß einer besonders bevorzugten Ausgestaltung der Erfindung eine Säge ist, kann das Verfahren zur Stauberfassung durch die folgenden Verfahrensschritte gekennzeichnet sein:
a) Bereitstellung einer Staubhaubenvorrichtung mit mindestens einer ersten Öffnung und einer zweiten Öffnung,
b) Befestigung der Staubhaubenvorrichtung an einer Säge,
c) Betrieb der Säge, wobei die Säge insbesondere in einem Einschnittmodus und in einem Vollschnittmodus betrieben werden kann,
d) Öffnen der ersten Öffnung in einem Vollschnittmodus der Säge oder
e) Öffnen der ersten und der zweiten Öffnung in einem Einschnittmodus der Säge.

Mit anderen Worten ist es im Sinne der Erfindung bevorzugt, dass während der Stauberfassung in einem Einschnittmodus eines Werkzeuggeräts die erste und die zweite Öffnung der Staubhaubenvorrichtung geöffnet sind und während der Stauberfassung in einem Vollschnittmodus eines Werkzeuggeräts nur die erste Öffnung der Staubhaubenvorrichtung geöffnet ist. Es kann im Sinne der Erfindung bevorzugt sein, dass für das vorgeschlagene Verfahren eine vorgeschlagene Staubhaubenvorrichtung verwendet wird. Es kann aber auch bevorzugt sein, dass für das vorgeschlagene Verfahren eine Staubhaubenvorrichtung verwendet wird, die auf einer Unterseite mindestens zwei Öffnungen zum Einsaugen von Staub oder Staubpartikeln aufweist. Es ist im Sinne der Erfindung ganz besonders bevorzugt, dass das Werkzeuggerät im Kontext des vorgeschlagenen Verfahrens in einer Gleichlauf-Betriebsweise betrieben wird, d.h. dass eine Bewegungsrichtung des Werkzeuggeräts bei der Arbeit und eine Drehrichtung des Arbeitsmittels des Werkzeuggeräts gleichgerichtet sind. Insbesondere kann das Werkzeuggerät in eine Raumrichtung "nach vorne" bewegt werden, während sich das Arbeitsmittel ebenfalls in eine Raumrichtung "nach vorne" dreht.

Es ist im Sinne der Erfindung bevorzugt, dass ein durch die Stauberfassung entstehendes Gemisch aus Staub und Luft in verschiedenen Luftströmungen durch das Innere der Staubhaubenvorrichtung in Richtung eines Absaugstutzens geführt wird. Insbesondere können die Luftströmungen durch den ersten und den zweiten Luftkanal geführt werden, die von dem Führungselement der Staubhaube voneinander getrennt werden. Es ist im Sinne der Erfindung mit anderen Worten bevorzugt, dass die Luftströmungen im Inneren der Staubhaubenvorrichtung mit mindestens einem Führungselement voneinander getrennt werden.

Die Definitionen, technischen Wirkungen und Vorteile der Erfindung, die in Zusammenhang mit der Staubhaube beschrieben wurden, gelten für die Verwendung der Staubhaube und das Verfahren zur Stauberfassung analog.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer Unterseite einer bevorzugten Ausführungsform der vorgeschlagenen Staubhaubenvorrichtung
- Fig. 2: Seitenansicht einer bevorzugten Ausführungsform der vorgeschlagenen Staubhaubenvorrichtung
- Fig. 3: Schnittdarstellung einer bevorzugten Ausführungsform der vorgeschlagenen Staubhaubenvorrichtung
- Fig. 4: Schrägansicht einer bevorzugten Ausführungsform der vorgeschlagenen Staubhaubenvorrichtung
- Fig. 5: Ansicht einer bevorzugten Ausführungsform der vorgeschlagenen Staubhaubenvorrichtung in Verbindung mit einem Arbeitsmittel eines Werkzeuggeräts

### Ausführungsbeispiele:

Figur 1 zeigt eine Unterseite (3) einer bevorzugten Ausführungsform der vorgeschlagenen Staubhaubenvorrichtung (1). Nicht dargestellt in den Figuren ist das Werkzeuggerät (2), an dem die Staubhaube (1) befestigt werden kann. Die Staubhaubenvorrichtung (1) weist an ihrer Unterseite (3) verschiedene Öffnungen (4, 5, 11, 12) auf. Eine erste Öffnung (4) wird beispielsweise von einem Hauptkanal gebildet, der zumindest teilweise als Einführschlitz für das Arbeitsmittel (18) des Werkzeuggeräts (2) dient. Dieser Einführschlitz (4) ist vorzugsweise sowohl im Vollschnittmodus, als auch im Einschnittmodus des Werkzeuggeräts (2) geöffnet. Ferner umfasst die Staubhaubenvorrichtung (1) an ihrer Unterseite (3) eine zweite Öffnung (5), die von Seitenkanälen (11a, 11b) und einer vorderen Schlitzöffnung (12) gebildet werden kann. Vorzugsweise verläuft die Schlitzöffnung (5) im Wesentlichen parallel zu einer Vorderkante der Staubhaubenvorrichtung (1). Es ist im Sinne der Erfindung bevorzugt, dass die Schlitzöffnung (12) in einem vorderen Bereich der Staubhaubenvorrichtung (1) vorliegt, wobei die Staubhaubenvorrichtung (1) in dem vorderen Bereich (9) von einer abgerundeten Außenwand (13) bzw. Vorderseite begrenzt wird. Die Rückseite (10) der Staubhaubenvorrichtung (1) kann vorzugsweise eben bzw. flach ausgebildet sein. Im Wesentlichen senkrecht zu der vorderen Schlitzöffnung (12) sind die Seitenkanäle (11a, 11b) angeordnet, die allerdings im Inneren der Staubhaube (1) von der vorderen Schlitzöffnung (12) getrennt vorliegt. Insbesondere speist die vordere Schlitzöffnung (12) einen ersten Luftkanal (14), während die Seitenkanäle (11a, 11b) und die der Hauptkanal (4) einen zweiten Luftkanal (15) der Staubhaubenvorrichtung (1) speisen. Vorzugsweise münden die Luftkanäle (14, 15) in einem oberen Bereich der Staubhaube (1) in einen Absaugstutzen (7), der mit einer Staubsaugvorrichtung (nicht dargestellt) verbunden vorliegen kann. Durch den Absaugstutzen (7) kann die Staubhaubenvorrichtung (1) vorteilhafterweise unter Verwendung der Staubsaugvorrichtung mit einem Unterdruck beaufschlagt werden, wobei sich der Unterdruck durch die Anordnung des Führungselements (8) im Inneren (6) der Staubhaube (1) besonders gleichmäßig verteilt. Dadurch können vorteilhafterweise gleichmäßige Druckverhältnisse und Ansaugkräfte in den Luftkanälen (14, 15) und in den Öffnungen (4, 5, 11, 12), die den Luftkanälen (14, 15) zugeordnet sind, bereitgestellt werden.

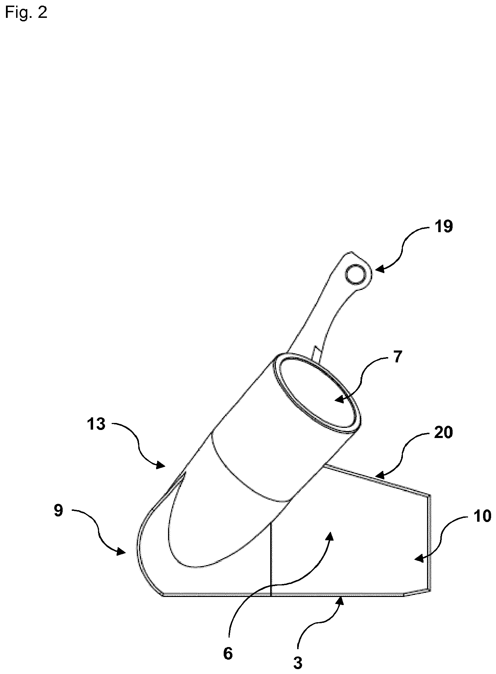

Figur 2 zeigt eine Seitenansicht einer bevorzugten Ausführungsform der vorgeschlagenen Staubhaubenvorrichtung (1). Insbesondere zeigt Figur 2 eine Staubhaube (1), die auf einer dem Betrachter zugewandten Seite einen Absaugstutzen (7) aufweist, während die Staubhaube (1) auf einer dem Betrachter abgewandten Seite ein vorzugsweise hebelartiges Befestigungsmittel (19) aufweist, mit dem die Staubhaubenvorrichtung (1) an einem Werkzeuggerät (2) befestigt werden kann. Durch die Öffnung im oberen Bereich des Befestigungsmittels (19) kann beispielsweise eine Schraube als Verbindungsmittel geführt werden, mit dem die Staubhaube (1) an einer weiteren Staubhaube des Werkzeuggeräts (2) bzw. an einem Blattschutz des Arbeitsmittels (18) des Werkzeuggeräts (2) befestigt werden kann.

In dem in Figur 2 dargestellten Ausführungsbeispiel der Erfindung wird die Staubhaube (1) nach außen von einem Gehäuse (20) begrenzt, wobei das Gehäuse (20) beispielsweise aus zwei miteinander korrespondierenden Hälften gebildet werden kann. Aufgrund der Vorsehung des Absaugstutzens (7) sind die beiden Hälften des Gehäuses (20) der Staubhaube (1) vorzugsweise nicht symmetrisch zueinander ausgebildet. Insbesondere ist es im Sinne der Erfindung bevorzugt, dass die erste Öffnung (4) der Staubhaubenvorrichtung (1) nicht mittig auf ihrer Unterseite (3) angeordnet vorliegt, sondern dass die Hälfte des Gehäuses (20) der Staubhaube (1), die den Absaugstutzen (7) umfasst, etwas breiter ausgebildet ist als die Hälfte des Gehäuses (20) der Staubhaubenvorrichtung (1), die das Befestigungsmittel (19) umfasst. Insbesondere umschließt das Gehäuse (20) der Staubhaubenvorrichtung (1) einen Innenraum (6), der im Sinne der Erfindung bevorzugt auch als das «Innere» der Staubhaubenvorrichtung (1) bezeichnet wird.

Auf der linken Seite der Figur 2 ist der vordere Bereich (9) der Staubhaube (1) dargestellt, der insbesondere von einer vorderen Außenwand (13) bzw. Vorderwand der Staubhaubenvorrichtung (1) begrenzt wird. Insbesondere zeigt Figur 2 die gerundete Ausbildung des vorderen Bereichs (9) der Staubhaubenvorrichtung (1). Auf der rechten Seite von Figur 2 ist die Rückseite (10) der Staubhaubenvorrichtung (1) dargestellt, wobei die Rückseite (10) der Staubhaube (1) vorzugsweise flach ausgebildet ist.

Figur 3 zeigt eine Schnittdarstellung einer bevorzugten Ausführungsform der vorgeschlagenen Staubhaubenvorrichtung (1). Insbesondere zeigt Figur 3 das Führungselement (8) bzw. seine Lage im Inneren (6) des in Figur 3 dargestellten Ausführungsbeispiels der vorgeschlagenen Staubhaubenvorrichtung (1). Das Führungselement (8) erstreckt sich ausgehend von der Unterseite (3) der Staubhaubenvorrichtung (1) in Richtung des Absaugstutzens (7) und trennt einen ersten Luftkanal (14) von einem zweiten Luftkanal (15). Der erste Luftkanal (14) ist vorzugsweise im vorderen Bereich (9) der Staubhaube (1) angeordnet. Der zweite Luftkanal (15) umfasst vorzugsweise einen Absaugbereich (16) und einen Sammelbereich (17). Der Absaugbereich (16) bildet vorzugsweise den oberen Bereich des zweiten Luftkanals (15), der in den Absaugstutzen (7) übergeht. Der Sammelbereich (17) des zweiten Luftkanals (15) verläuft vorzugsweise im Wesentlichen parallel zur Unterseite (3) der Staubhaubenvorrichtung (1) und insbesondere oberhalb der Seitenkanäle (11a, 11b) und oberhalb des Hauptkanals (4), in dem sich zumindest teilweise das Arbeitsmittel (18) des Werkzeuggeräts (2) befinden kann. Vorzugsweise erstreckt sich der erste Luftkanal (14) zwischen dem Führungselement (8) und der Vorderwand (13) der Staubhaubenvorrichtung (1). Den unteren Ausgang des ersten Luftkanals (14) bildet vorzugsweise ein Abschnitt der zweiten Öffnung (5) der vorgeschlagenen Staubhaube (1), insbesondere die vordere Schlitzöffnung (12).

Die vordere Schlitzöffnung (12) kann beispielsweise eine Breite von 5 bis 10 mm aufweisen, wobei sich eine Breite von 7,5 mm als besonders günstig für das Absaugverhalten der Staubhaube (1) erwiesen hat. Die Seitenkanäle (11a, 11b) weisen vorzugsweise eine Breite von 1 bis 5 mm auf, wobei hier insbesondere ein Breite von 3 mm eine effektive Stauberfassung ermöglicht. Der mittige Werkzeugöffnungskanal (4) kann vorzugsweise eine Breite von 2 bis 10 mm aufweisen, wobei eine Breite von 6 mm besonders bevorzugt ist. Es hat sich gezeigt, dass ein besonders gutes Stauberfassungs- und Absaugverhalten der Staubhaubenvorrichtung (1) bei einer Kombination der Breite für die Schlitzöffnung (12) von 7,5 mm, der Seitenkanäle (11a, 11b) von 3 mm und der ersten Öffnung (4) von 6 mm erreicht wird.

Ferner zeigt Figur 3 die vorzugsweise hebelartig ausgebildete Vorrichtung (19) zur Befestigung der Staubhaubenvorrichtung (1) an dem Werkzeuggerät (2), sowie die Rückseite (10) der Staubhaube (1).

Figur 4 zeigt eine Schrägansicht einer bevorzugten Ausführungsform der vorgeschlagenen Staubhaubenvorrichtung (1). Neben den bereits in den vorhergehenden Figuren gezeigten Gegenständen zeigt Figur 4 insbesondere eine mögliche, bevorzugte Strukturierung bzw. Ausgestaltung der Unterseite (3) der Staubhaubenvorrichtung (1). An den Seiten der in Figur 4 dargestellten Unterseite (3) der Staubhaube (1) liegen beispielsweise die Seitenkanäle (11a, 11b) angeordnet vor. In einem vorderen Bereich (9) der Staubhaubenvorrichtung (1) ist vorzugsweise eine Schlitzöffnung (12) angeordnet, die zusammen mit den Seitenkanälen (11a, 11b) die zweite Öffnung (5) im Sinne der Erfindung bildet, wobei diese zweite Öffnung (5) beispielsweise im Vollschnittmodus des Werkzeuggeräts (2) geschlossen sein kann. Im Übergangsbereich zwischen den Seitenkanälen (11a, 11b) und der vorderen Schlitzöffnung (12) beginnt das Führungselement (8), das sich ins Innere (6) der Staubhaubenvorrichtung (1) hinein erstreckt und dort die beiden Luftkanäle (14, 15) voneinander trennt.

Die erste Öffnung (4) weist im hinteren Bereich (10) der Staubhaubenvorrichtung (1) zunächst im Wesentlichen parallel verlaufende Seitenkanten auf. In diesem Bereich der ersten Öffnung (4) kann sich beispielsweise, wenn die vorgeschlagene Staubhaubenvorrichtung (1) mit einem Werkzeuggerät (2) verbunden vorliegt, das Arbeitsmittel (18) des Werkzeuggeräts (2) drehen. Dieser Bereich der ersten Öffnung (4) wird vorzugsweise als hinterer Abschnitt oder als Arbeitsmittelbereich der ersten Öffnung (4) bezeichnet. Im weiteren Verlauf - in Richtung des vorderen Bereichs (9) der Staubhaubenvorrichtung (1) - verbreitert sich die erste Öffnung (4). Dieser Bereich der ersten Öffnung (4) wird vorzugsweise als Absaugbereich oder vorderer Bereich der ersten Öffnung (4) der vorgeschlagenen Staubhaube (1) bezeichnet. Vorzugsweise ist der hintere Bereich der ersten Öffnung (4) dazu eingerichtet, zumindest teilweise das Arbeitsmittel (18) des Werkzeuggeräts (2) aufzunehmen, während der vordere Bereich der ersten Öffnung (4) der Stauberfassung dient, und zwar vorzugsweise sowohl im Einschnittmodus, als auch im Vollschnittmodus. Vorzugsweise wird das durch die erste Öffnung (4) eingesaugte Staub-Luft-Gemisch zusammen mit dem durch die Seitenkanäle (11a, 11b) eingesaugte Staub-Luft-Gemisch durch den zweiten Luftkanal (15) in Richtung Absaugstutzen (7) befördert, während das Staub-Luft-Gemisch, das durch die vordere Schlitzöffnung (12) eingesaugt wird, durch den ersten Luftkanal (14) im vorderen Bereich (9) der Staubhaubenvorrichtung (1) in Richtung des Absaugstutzens (7) befördert wird.

Figur 5 zeigt Ansicht einer bevorzugten Ausführungsform der vorgeschlagenen Staubhaubenvorrichtung (1) in Verbindung mit einem Arbeitsmittel (18) eines Werkzeuggeräts (2). Insbesondere zeigt Figur 5 eine mögliche Orientierung von Arbeitsmittel (18) und Staubhaube (1) zueinander. Beispielsweise rotiert das in Figur 5 dargestellte Arbeitsmittel (18) des Werkzeuggeräts (2) innerhalb des hinteren Bereichs der ersten Öffnung (4) der Staubhaubenvorrichtung (1), während der vordere Bereich der ersten Öffnung (4) im Wesentlichen freibleibt, um Staub erfassen zu können. Ferner zeigt Figur 5 die zweite Öffnung (5) und eine mögliche Anordnung dieser zweiten Öffnung (5) auf der Unterseite (3) der dargestellten Staubhaube (1). Die Staubhaubenvorrichtung (1) kann mit einem Befestigungsmittel (19) an dem Werkzeuggerät (2) bzw. an einer weiteren Staubhaube des Werkzeugeräts (2) bzw. an einem Blattschutz für das Arbeitsmittel (18) des Werkzeuggeräts (2) befestigt werden. Bei dem in Figur 5 dargestellten Arbeitsmittel (18) handelt es sich gemäß einer besonders bevorzugten Ausführung der Erfindung um ein Sägeblatt, das an einer Säge als Werkzeuggerät (2) befestigt sein kann.

### Bezugszeichenliste

- 1: Staubhaubenvorrichtung bzw Staubhaube
- 2: Werkzeuggerät
- 3: Unterseite der Staubhaube
- 4: erste Öffnung
- 5: zweite Öffnung
- 6: Innenraum der Staubhaube
- 7: Absaugstutzen
- 8: Führungselement
- 9: vorderer Bereich der Staubhaube
- 10: hinterer Bereich der Staubhaube
- 11a, b: Seitenkanäle
- 12: vordere Schlitzöffnung
- 13: vordere Außenwand der Staubhaube, Vorderseite
- 14: erster Luftkanal
- 15: zweiter Luftkanal
- 16: oberer Absaugkanal
- 17: Sammelbereich
- 18: Arbeitsmittel des Werkzeuggeräts
- 19: Befestigungsmittel
- 20: Gehäuse der Staubhaube

## Patentansprüche

1. Staubhaubenvorrichtung (1) für ein Werkzeuggerät (2),
**dadurch gekennzeichnet, dass**
die Staubhaubenvorrichtung (1) auf einer Unterseite (3) mindestens eine erste Öffnung (4) und eine zweite Öffnung (5) zur Erfassung von Staub aufweist, wobei ein durch die Stauberfassung entstehendes Gemisch aus Staub und Luft in verschiedenen Luftströmungen durch das Innere (6) der Staubhaubenvorrichtung (1) in Richtung eines Absaugstutzens (7) führbar ist, wobei die Luftströmungen im Inneren (6) der Staubhaubenvorrichtung (1) von mindestens einem Führungselement (8) voneinander trennbar sind.

2. Staubhaubenvorrichtung (1) nach Anspruch 1
**dadurch gekennzeichnet, dass**
die zweite Öffnung (5) von zwei Seitenkanälen (11a, 11b) und einer vorderen Schlitzöffnung (12) gebildet wird.

3. Staubhaubenvorrichtung (1) nach Anspruch 1 oder 2
**dadurch gekennzeichnet, dass**
sich das mindestens eine Führungselement (8) ausgehend von der Unterseite (3) der Staubhaubenvorrichtung (1) in das Innere (6) der Staubhaubenvorrichtung (1) erstreckt.

4. Staubhaubenvorrichtung (1) nach einem der vorhergehenden Ansprüche
**dadurch gekennzeichnet, dass**
das Führungselement (8) gebogen ausgebildet ist, wobei das Führungselement (8) in einem oberen Bereich im Wesentlichen dem Verlauf einer vorderen Außenwand (13) der Staubhaubenvorrichtung (1) folgt.

5. Staubhaubenvorrichtung (1) nach einem der vorhergehenden Ansprüche
**dadurch gekennzeichnet, dass**
das Führungselement (8) das Innere (6) der Staubhaubenvorrichtung (1) in einen ersten Luftkanal (14) und einen zweiten Luftkanal (15) teilt.

6. Staubhaubenvorrichtung (1) nach einem der vorhergehenden Ansprüche
**dadurch gekennzeichnet, dass**
der zweite Luftkanal (15) einen oberen Absaugbereich (16) umfasst, der getrennt von dem Führungselement (8) neben dem ersten Luftkanal (14) angeordnet vorliegt, und einen Sammelbereich (17), der oberhalb der Unterseite (3) der Staubhaubenvorrichtung (1) in deren Innenraum (6) angeordnet vorliegt.

7. Verwendung einer Staubhaubenvorrichtung (1), wobei die Staubhaubenvorrichtung (1) an einer Unterseite (3) mindestens eine erste Öffnung (4) und eine zweite Öffnung (5) umfasst, in Verbindung mit einem Werkzeuggerät (2) und/oder einer Staubhaubenvorrichtung für das Arbeitsmittel (18) des Werkzeuggeräts (2).

8. Verwendung der Staubhaubenvorrichtung als zusätzliche Staubhaubenvorrichtung in Ergänzung zu einer bereits vorhandenen Staubhaubenvorrichtung für das Arbeitsmittel (18) des Werkzeuggeräts (2).

9. Verwendung der Staubhaubenvorrichtung nach Anspruch 7 oder 8
**dadurch gekennzeichnet, dass**
das Werkzeuggerät (2) ein im Wesentlichen scheibenförmiges Arbeitsmittel (18) umfasst.

10. Verwendung der Staubhaubenvorrichtung nach einem der Ansprüche 7 bis 9
**dadurch gekennzeichnet, dass**
eine Drehrichtung des Arbeitsmittels (18) des Werkzeugs (2) und eine Vorschubrichtung des Werkzeuggeräts (2) gleichgerichtet sind.

11. Verwendung der Staubhaubenvorrichtung nach einem der Ansprüche 7 bis 10
**dadurch gekennzeichnet, dass**
in einem Einschnittmodus des Werkzeuggeräts (2) die erste Öffnung (4) und die zweite Öffnung (5) der Staubhaubenvorrichtung (1) geöffnet sind.

12. Verwendung der Staubhaubenvorrichtung nach einem der Ansprüche 7 bis 11
**dadurch gekennzeichnet, dass**
in einem Vollschnittmodus nur die erste Öffnung (4) der Staubhaubenvorrichtung (1) geöffnet ist.

13. Verfahren zur Erfassung von Staub durch eine Staubhaubenvorrichtung (1), wobei die Staubhaubenvorrichtung (1) an einer Unterseite (3) mindestens eine erste Öffnung (4) und eine zweite Öffnung (5) umfasst,
**umfassend die folgenden Schritte:**
a) Bereitstellung einer Staubhaubenvorrichtung (1) mit einer Unterseite (3), wobei die Staubhaubenvorrichtung (1) an einer Unterseite (3) mindestens eine erste Öffnung (4) und eine zweite Öffnung (5) umfasst,
b) Befestigung der Staubhaubenvorrichtung (1) an einem Werkzeuggerät (2),
c) Betrieb des Werkzeuggeräts (2), wobei das Werkzeuggerät (2) insbesondere in einem Einschnittmodus und in einem Vollschnittmodus betrieben werden kann,
d) Öffnen der ersten Öffnung (4) in einem Vollschnittmodus des Werkzeuggeräts (2) oder
e) Öffnen der ersten Öffnung (4) und der zweiten Öffnung (5) in einem Einschnittmodus des Werkzeuggeräts (2).

14. Verwendung der Staubhaubenvorrichtung nach einem der Ansprüche 7 bis 12 oder Verfahren zur Stauberfassung nach Anspruch 13
**dadurch gekennzeichnet, dass**
ein durch die Stauberfassung entstehendes Gemisch aus Staub und Luft in verschiedenen Luftkanälen (14, 15) durch das Innere (6) der Staubhaubenvorrichtung (1) in Richtung eines Absaugstutzens (7) geführt wird.

15. Verwendung der Staubhaubenvorrichtung oder Verfahren zur Stauberfassung nach Anspruch 14
**dadurch gekennzeichnet, dass**
die Luftkanäle (14, 15) im Inneren (6) der Staubhaubenvorrichtung (1) mit mindestens einem Führungselement (8) voneinander getrennt werden.
